# EUROPEAN PATENT APPLICATION

(11) **EP 0 962 719 A1**
(43) Date of publication of application: **08.12.1999**
(21) Application number: 99201722.8
(22) Date of filing: 01.06.1999
(51) Int. Cl.: F24F 12/00, F24F 7/08, A01K 1/00, F28F 9/013, F26B 17/12

(54) **Device for drying poultry manure**

(30) Priority: 02.06.1998 NL 1009300
(71) Applicant: FARMTEC B.V., NL-8181 BH Heerde (NL)
(72) Inventor: van der Veer, Harry Matheus, 8181 BH Heerde (NL)
(74) Representative: Ferguson, Alexander

(57) **Abstract**

A device (50) is provided for the post-drying of poultry manure, the device comprising an air heater (56) and a manure drier, the manure post-drier (50) comprising a housing (52) with a perforated entrance wall (53) for supply of heated, dry air and a perforated exit wall (54) for the discharge of humid air, the exit wall having a larger surface than the entrance wall and the entrance wall being connected to the air heater (56).

A device for drying manure in a poultry stable is provided, in particular a poultry stable (1) provided with floor systems (9), by heating fresh outside air for discharging moisture produced by the poultry and their manure, which device comprises a heat exchanger (5) which is arranged over substantially the entire ridge length of the stable, the heat exchanger (5) comprising an air casing (6) in which at regular distances from each other a number of tubes (8) are arranged, the air casing being provided with adjustable air inlet openings (7) for allowing warm stable air in, which air inlet openings are arranged over the entire length of the casing.

## Description

The invention relates to a device for drying poultry manure. The invention more particularly relates to a device for post-drying poultry manure, and also to a device for drying poultry manure in a poultry stable.

Fresh poultry manure produced by poultry has a dry substance percentage of 19-22%. Usually the manure is dried in the poultry stable. In floor systems and particularly floor cage systems for poultry, manure is dropped on a conveyor belt per floor; from the side edges of the conveyor belt air is then blown over the belt to dry the manure. At the most a percentage of 55% of dry substance in the dried manure is obtained in this way. Depending on the air humidity the dry substance percentage can be considerably lower.

The buyers of dried poultry manure however, these days consider a dry substance percentage of 55% too low. They demand a dry substance percentage of at least 70%.

A great drawback of known poultry manure drier devices is that dried poultry manure with a varying dry substance percentage is provided.

Another drawback is that the dried poultry manure has a dry substance percentage which is not considered high enough by the buyers of the poultry manure.

Yet another drawback is that known devices have poor energetic efficiency.

It is an object of the invention to provide a device with which dried poultry manure with a dry substance percentage of at least 70% is provided.

It is yet another object of the invention to provide a device for post-drying poultry manure, which manure has been dried in a poultry stable to a dry substance percentage of 55% at the most.

It is yet another object of the invention to provide a device for drying poultry manure which dries manure to certain percentage of dry substance in a reliable manner.

It is yet another object of the invention to provide a device for drying or post-drying poultry manure which works in an energetic favourable manner.

According to a first aspect of the invention one or more of these objects are achieved with a device for post-drying poultry manure, the device comprising an air heater and a manure post-drier, the manure post-drier comprising a housing with a perforated entrance wall for supply of heated, dry air and a perforated exit wall for the discharge of humid air, the exit wall having a larger surface than the entrance wall and the entrance wall being connected to the air heater.

In this way a manure post-drying device is provided with which poultry manure which has been dried in a poultry stable to a dry substance percentage of 55% at the most, can be post-dried to a dry substance percentage of at least 70%, and if so desired to a dry substance percentage of 80-100%. This high percentage of dry substance is achieved with certainty by the inclusion of the air heater, which supplies sufficiently heated and therefore dry air. This heated air is efficiently used by letting the heated dry air flow through the relatively small perforated entrance wall at high speed, and letting it flow through the relatively large perforated exit wall at relatively low speed when the air has become humid as a result of absorbing water from the manure. The air therefore will gradually start to flow slower and slower between the entrance wall and the exit wall, whereas the air also gradually becomes more humid. As the air becomes more humid the air also flows more slowly, so that the more humid air is still given sufficient time to absorb additional moisture from the manure. In this way an efficient post-drying of the poultry manure is obtained, with efficient use of the supplied heating energy, whereas a high processing speed of the poultry manure at post-drying is still provided.

Preferably the manure post-drier is annular, the circumferential, preferably circular inner wall forming the entrance wall and the circumferential, preferably circular outer wall forming the exit wall, and the annular manure post-drier preferably being accommodated in an enclosing. In this manner a compact manure post-drier is obtained, in which there is a large difference in surface between the entrance wall and the exit wall.

According to a preferred embodiment an agitator is arranged to divide the manure in the manure post-drier and to agitate it. It has appeared that the manure near the entrance wall dries more quickly than the manure near the exit wall, so that it is desirable to agitate the manure to obtain uniformly dried manure. Agitating in the annular manure post-drier is easy to perform with a simple agitating device.

Preferably the agitator is adapted for removing the manure out of the post-drier. With one single means, the agitator, a number of functions is thus fulfilled.

Preferably the manure post-drier has an entrance opening for manure that is not yet post-dried and a discharge opening for post-dried manure. The entrance opening is advantageously at the upper side, so that manure can fall from a manure supply belt into the manure post-drier, and the discharge opening is advantageously at the lower side, so that for instance by operating a slide the dried manure can for instance fall in a discharge funnel.

Preferably the air heater heats the air with the help of warm water. In this way quick heating is achieved with the help of a compact installation. The warm water can be supplied by a central-heating boiler.

According to a preferred embodiment an air pre-heater is arranged before the air heater, which pre-heats fresh air with the help of the used humid air and preferably also with the help of combustion gasses and the like. After post-drying the manure the humid air is still warm and contains sufficient energy to pre-heat the fresh air supplied for drying in a heat exchanger, from which the pre-heated air is conducted to the air heater. The warm flue gasses from for instance the central-heating boiler can be used in the heat exchanger as well.

According to a second aspect the invention relates to a device for drying manure in a poultry stable, in particular a poultry stable provided with floor systems, by heating fresh outside air for discharging moisture produced by the poultry and their manure, which device comprises a heat exchanger which is arranged over substantially the entire ridge length of the stable, the heat exchanger comprising an air casing in which at regular distances from each other a number of tubes are arranged.

Such a device is known from US patent specification 4.590.990. This document shows a ventilation heat re-use system for a stable, consisting of a counter-flow heat exchanger with a wide tube near the roof of the stable, in which tubes are arranged at regular distances from each other. Stable air is sucked in from the space underneath the stable and guided to the outside through tubes at the head end of the stable. Fresh air is guided through a wide tube around the tubes. Subsequently this air is conducted into the stable through an even wider tube with openings arranged around it or to the animal boxes through a number of vertical tubes.

According to the invention the air casing in a device as described above is provided with adjustable air inlet openings for allowing warm stable air in, which air inlet openings are arranged over the entire length of the casing.

With the help of air inlet openings the warm stable air is guided in the air casing, so that the cold fresh outside air which flows through the tubes arranged therein is heated up. Because the air inlet openings have an adjustable opening they can be adjusted such that through each opening an equal quantity of air is sucked in and the fresh outside air is optimally heated. If so desired an air washer or something like it can be arranged at the discharge opening for the used stable air at the head end of the stable in order to cleanse the air.

Preferably the air inlet openings are arranged at regular distances from each other in the side walls on both sides of the casing. With the thus arranged air inlet openings the warmest stable air which is present in the top of the ridge, is sucked in, and the temperature gradient will be kept about constant over the entire length of the heat exchanger.

In order to collect the warmth from the stable as well as possible near the ridge, the roof is preferably placed at a small angle to the horizontal, the angle of inclination of the roof preferably being between 10° and 40°, most preferably 18°.

To obtain a good distribution of the fresh air over the entire stable preferably the heat exchanger tubes are connected to ducts to distribute the outside air led through the heat exchanger tubes to the desired places in the stable, such as the manure belts concerned under the cages. In this way it is achieved that the freshly supplied air of which the relative humidity is lowered by heating it, very well absorbs the moisture present in the chicken manure. The air distribution ducts here preferably end on both sides of the manure discharge belts in the stable. These manure discharge belts run under the cages for the poultry, so that the supplied heated air after absorbing the moisture from the manure, but rich with oxygen, flows past the poultry when rising.

In order to let the warmth transfer take place as well as possible preferably the heat exchanger tubes are distributed regularly at desired distances one to the other over the cross-section of the casing with the help of distribution means.

This can very well be achieved because the distribution means consist of a number of vertical attachment rods or strips, to which several heat exchanger tubes are alternatingly attached on both sides, and which strips near the upper side are suspended from support rods that are horizontally arranged at regular distances from each other near the upper side of the casing. In order to easily clean the casing or the housing of the heat exchanger, the device is preferably designed such that the vertical strips can be shifted over the support rods near the upper side and each heat exchanger tube is attached to a vertical strip with the help of a flexible band and each strip is provided with vertical slots at regular distances, in which the ends of the flexible bands can be attached. In this way the tubes that are situated at regular distances from each other in the casing can be moved aside easily, as a result of which a space is formed, through which a person can move to carry out cleaning activities.

The invention will be elucidated on the basis of an exemplary embodiment, referring to the attached drawings, in which:
Figure 1 shows a cross-section of a stable with air heating device with heat exchanger according to the invention;
Figure 2 shows a top view in the stable according to figure 1;
Figure 3 shows a side view of the heat exchanger of figure 1;
Figure 4 shows a part of the heat exchanger according to figure 1 in cross-section;
Figure 5 shows a part of figure 3 in side view;
Figure 6 shows a flexible band for attaching a tube in the heat exchanger in the figures 4 and 5 on a larger scale; and
Figure 7 shows a device for post-drying poultry manure according to the invention.

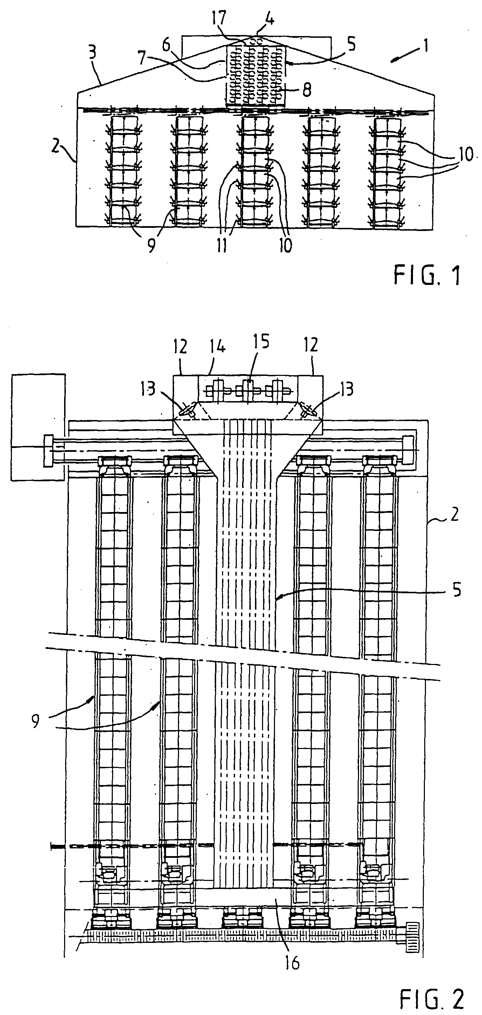

Figure 1 shows a cross-section of a stable 1 consisting of walls 2 and a roof 3 at a small angle to the horizontal, a heat exchanger 5 being arranged below the ridge 4 of the stable 1, which consists of a housing or a casing 6 with openings 7 at regular distances in its walls, of which openings the passage opening can be adjusted. Inside the housing 6, heat exchange tubes 8 are regularly distributed over the space, the manner of suspending of which will be discussed below. In connection with the scale of the drawing, the heat exchanger 8 is shown schematically with dot-stripe lines for the sake of clarity, in figure 1.

The stable 1 with roof 3 shown in figure 1, is generally used in poultry farming in which the poultry in the stable 1 is kept in cages 10 stacked on top of each other in a number of rows 9, so-called floor cage systems, in which under the row of cages 10 of one floor a manure discharge belt 11 is arranged over the entire length of the row 9.

Figure 2 shows a top view of the poultry stable 1 from figure 1, in which the roof 3 has been left out for a clear sight. It can be seen that the heat exchanger 5 is arranged over almost the entire length, near the upper side of the poultry stable, in which via the air outlets 12 near the upper side of the front or rear facade of the stable, the warm stable air to be discharged is sucked out of the stable through the casing with the help of fans 13, whereas via the air inlet 14 outside air is distributed over all heat exchange tubes 8 with the help of the fans 15. The air discharged from the stable can subsequently be washed and cleaned with the help of known methods, so that the dust particles discharged with the stable air can be collected.

The outside air to be heated is guided through the tubes 8 via the air inlet 14 with the help of the fans 15 over the full length of the heat exchanger 5, in which the air flowing through the tubes is heated in the meantime by the stable air to be discharged that is flowing in counterflow past the outside of the tubes 8. Near the other end of the stable the tubes 8 of the heat exchanger 5 end in a duct 16, serving to subsequently distribute the heated fresh outside air over the stable via smaller ducts, the ducts 16 ending near the manure belts 11, so that the heated fresh outside air with relative low air humidity flows over the manure of the poultry, which is on the manure belts which are under the cages 10 of the poultry, as a result of which moisture is extracted from the manure. In this way the manure is dried. The freshly supplied air which now contains more moisture, will rise with the help of the warmth of the poultry. This air which has dried the manure, however still contains a lot of oxygen which is necessary for the wellbeing of the poultry. Subsequently the air heated by the poultry will rise to the ridge of the roof and finally be discharged via the adjustable openings in the walls of the housing or casing 6 of the heat exchanger 5.

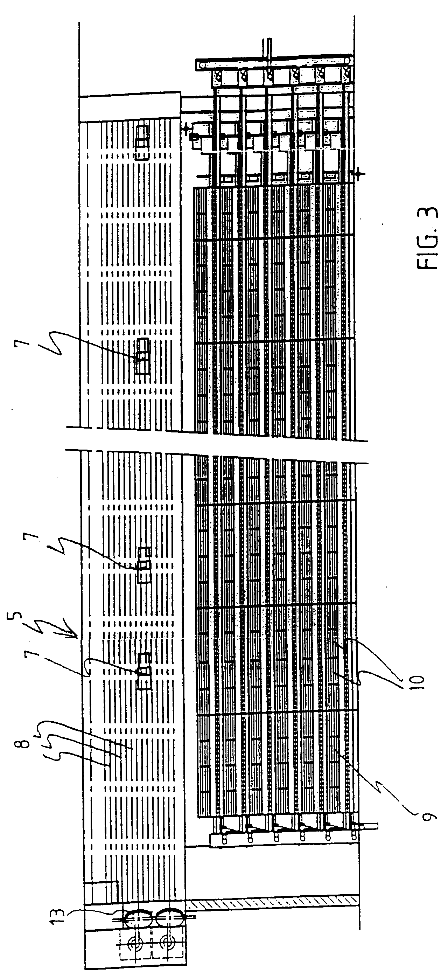

As shown in figure 3 the stable air to be discharged is sucked out with the help of the fans 13 through the adjustable openings 7 (see figure 1) distributed at regular distance of the walls of the casing or housing 6 via the casing of the heat exchanger 5, the warm air being guided past the heat exchanger tubes 8 and subsequently being discharged. The warm used stable air here gives off a part of its warmth to the heat exchanger tubes 8 through which the colder outside air is flowing. Because the outside air and the stable air are flowing through the heat exchanger 5 in opposite directions, an efficient heat exchange is obtained. As a result of the large length of the heat exchanger 5 a very good heat exchange of the warm stable air to the cold outside air is obtained. The passage of the openings 7 can be adjusted, that is to say the size of each opening can be adjusted separately.

Because the heat exchanger 5 is arranged below the ridge of the roof a part of the stable is used, which is not suitable for any other purpose and therefore no useful space of the stable is taken up by the heat exchanger 5 and the warm stable air which rises as a result of the heating, can flow in freely via the openings in the casing walls of the heat exchanger 5. As a result of the suction of the finished stable air near the ridge taking place over the entire length of the stable, this ventilation is similar to ridge ventilation, in which the stable air to be discharged is indeed discharged at different locations over the length of the stable, but is discharged centrally to a discharge opening or an air outlet 12, where the air can be collected and subsequently for instance cleansed with the help of an air washer. The discharged air can finally also be used for instance for manure drying of stored manure in a manure storage.

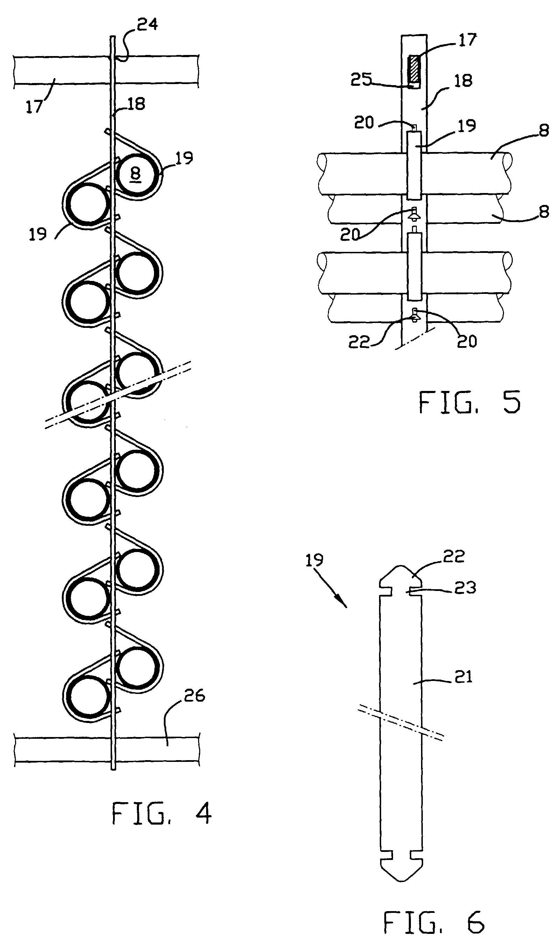

Figure 1 already schematically shows that four vertical rows or strands heat exchange tubes 8 are accommodated in the heat exchanger 5. The figures 4 and 5 show the suspension of the tubes 8. At the top of the heat exchange 5 a number of horizontally running support rods 17 are accommodated, four vertical strips 18 being suspended from each support rod 17 in this example as shown in figure 1. Figure 4 shows one such strip 18, to which the tubes 8 are attached on both sides with the help of flexible bands 19. Figure 5 shows that vertical slots 20 are arranged at regular distances in the vertical strip 18. The ends of the flexible bands 19 are inserted through said slots 20 in order to attach the tubes 8 to the vertical strip 18.

Figure 6 shows such a flexible band 19, which is shaped as a flexible strip 21 with on both ends a hook-shaped, here mushroom-shaped part 22, which via a narrower stem 23 is attached to the strip 21. When attaching a tube 8 to the vertical strip 18 a -in this example- mushroom-shaped end 22 is inserted through a slot 20 and rotated a quarter of a turn, as a result of which the mushroom-shaped end 22 hooks behind the strip 18. After that the strip 21 is put around the tube 8 and the other mushroom-shaped end 22 is inserted through a slot 20 that is situated above it, and the mushroom-shaped end 22 also hooks behind the strip 18, so that the tube 8 hangs in the flexible band 19, which band preferably is flexible and therefore preferably made from a synthetic.

Figure 4 shows that in the support rod 17 a notch 24 is made, in which the vertical strip 18 with the recess 25 (see figure 5) arranged near the upper side rests.

In this way the strip 12 can easily be hung in the correct position, while if so desired the strip with the tubes can easily be moved away to make room for cleansing the tubes and the inside of the heat exchanger and possibly to carry out a desired inspection or repairs. Near the lower side each strip 18 is provided with a recess or opening (not shown in figure 4) with which the strip 18 can be moved over a lower guide rod 26, which however serves to keep the strip 18 in the correct position, so that it cannot swivel or swing as a result of air movements.

The suspension of the tubes 5 can be realized in a simple manner and therefore quickly with the help of the vertical slots 21 in the strips 18 and the flexible bands 23, without additional attachment means being necessary, and a vertical row of tubes therefore is easily removed from the heat exchanger, and possibly one single tube 8 can easily be detached from the vertical strips 18. Because the tubes can easily be moved aside and are very easily accessible over the entire length repairs can quickly be carried out and cleaning and inspection of the device is simple.

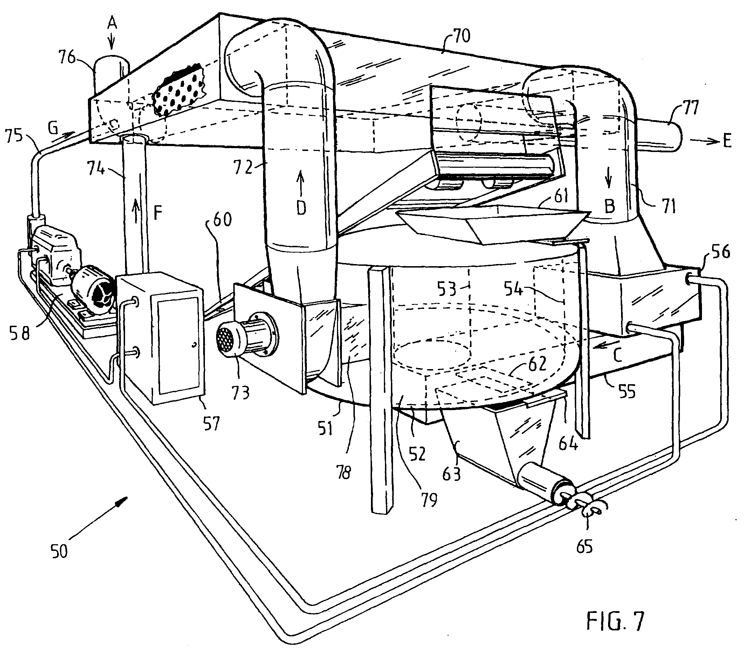

Figure 7 shows a post-drying device 50 according to the invention for manure which is dried in a poultry stable to a dry substance percentage of 55% (a more advanced drying is not possible in a poultry stable with the usual air heating systems, such as the type according to the invention described above).

The device comprises an enclosing 51 in which a housing 52 is accommodated. The housing 52 is annular and has a perforated cylindrical inner wall 53 and a perforated cylindrical outer wall 54, which is situated at a small radial distance within the circumferential wall 79 of the housing 52. The pre-dried poultry manure is brought in the annular housing and heated dry air is guided from the space enclosed by the annular housing through the perforated inner wall 53 and through the manure and discharged via the perforated outer wall 54, through the narrow annular discharge space between the circumferential wall 79 of the housing 52 and the outer wall 54, via the exit 78, fan 73 and the casing 72.

For supplying the heated dry air the space enclosed by the annular housing is connected to an air heater 56 via an air duct 55. The air is here heated with the help of hot water, which is supplied by a central heating boiler 57. This central heating boiler is fed itself with warm water from a heat power generator 58; in this way a high energetic efficiency is obtained. It will be clear however, that the hot water for the air heater can also be provided in another manner. The air in the air heater 56 can also be heated in another manner than with the help of hot water, for instance with hot discharge air of another machine.

The pre-dried manure, which has the shape of more or less humid grains, is supplied with a manure supply belt 60 and thrown in the partially perforated housing 52 via an opening 61 in the enclosing 51. The (closable) funnel-shaped opening 61 can be situated directly over the annular manure chamber, but alternatively centrally with respect to the housing 52, in which case a cone chute ensures radial and axial guidance of the manure from the opening 61 to the annular space. In the housing 52 an agitating device (not shown) is accommodated which distributes and then agitates the manure, so that an even drying is realised. The dried manure is moved by the agitation device to the -then opened- discharge opening 62 in the bottom of the envelope 51 and falls through it in a funnel 63 with a slidable hatch 64, and is further discharged with the help of a discharge screw 65.

The air heater 56 can directly suck in and heat fresh air. Preferably however an air pre-heater 70 is arranged with which the freshly supplied air is pre-heated prior to being conducted through an air casing 71 to the air heater 56. The pre-heating takes place with the help of the heated air which is conducted through the poultry manure in the housing 52 and which became humid as a result of that, but has not given off all its heat yet. This still warm humid air is guided to the air pre-heater 70 by means of an air casing 72. In order to ensure sufficient air circulation a fan 73 is placed at the beginning of the discharge air casing 72.

On the air pre-heater 70 the flue gas discharge 74 of the central heating boiler 57 and the combustion gas discharge 75 of the heat power installation 58 are also connected. The air pre-heater 70, which works according to the known heat exchange system, further has a supply tube 76 for the supply of fresh air, and a discharge tube 77 for the discharge of exhausted air.

The air circulation through the post-drying system for poultry manure is indicated by arrows in figure 7. Near arrow A fresh air is sucked into the system through supply tube 76. This air is pre-heated in the air pre-heater 70 and supplied by the air casing 71 to the air heater 56 at arrow B. In there the air is heated with the help of hot water from the central-heating boiler 57, and conducted through the air casing 55 to the manure post-drier at arrow C. In there the heated air is conducted through the manure from the inside to the outside while absorbing the moisture from the poultry manure. The air here gradually starts to flow more slowly, because the outer surface 54 of the annular housing 52 is larger than the inner surface 53. As the air also gradually becomes more humid when flowing from the inside to the outside, the humid air also has more time to absorb additional moisture, as a result of which a very good and efficient post-drying of the poultry manure is obtained. The humid air is subsequently taken from the narrow annular space between the outer surface 54 and the circumferential wall 79 of the housing 52 via the discharge 78 with the help of the fan 73 -in which therefore a flow takes place through the annular space- and is guided according to arrow D through the air casing 72 to the air pre-heater 70 to give off its residual heat. At arrow F the warm flue gasses from the central- heating boiler 57 and at arrow G the warm combustion gasses from the heat power installation 58 are also supplied to the air pre-heater 70 to use their residual heat. All exhausted air is discharged via the discharge tube 77 at arrow F.

With the help of this post-drying system for poultry manure a good post-drying of the poultry manure is obtained, in which the poultry manure obtains a dry substance percentage of minimally 70%, and if so desired a dry substance percentage of 80 to 100%. A relatively low flow of air is necessary here. In tests it appeared that in known cases where 40,000-80,000 m³/u was necessary, with the device according to the invention about 5,000 m³/u would suffice.

The post-drying device according to the invention could also be used for post-drying another type of manure.

It will be understood that the invention is not restricted to the exemplary embodiment described above; the scope of protection is determined by the following claims.

## Claims

1. Device for post-drying poultry manure, **characterized in that** the device comprises an air heater and a manure post-drier, the manure post-drier comprising a housing with a perforated entrance wall for supply of heated, dry air and a perforated exit wall for the discharge of moist air, the exit wall having a larger surface than the entrance wall and the entrance wall being connected to the air heater.

2. Device according to claim 1, **characterized in that** the manure post-drier is annular, the circumferential, preferably circular inner wall forming the entrance wall and the circumferential, preferably circular outer wall forming the exit wall, and the annular manure post-drier preferably being accommodated in an enclosing.

3. Device according to claim 1 or 2, **characterized in that** an agitator is arranged to divide the manure in the manure post-drier and to agitate it, and preferably also to remove it out of there.

4. Device according to any one of the preceding claims, **characterized in that** the manure post-drier has an entrance opening for manure that is not yet post-dried and a discharge opening for the post-dried manure.

5. Device according to any one of the preceding claims, **characterized in that** the air heater heats the air with the help of warm water.

6. Device according to any one of the preceding claims, **characterized in that** preceding to the air heater an air pre-heater is arranged, which pre-heats fresh air with the help of the used moist air and preferably also with the help of combustion gasses and the like.

7. Device for drying manure in a poultry stable, in particular a poultry stable provided with floor systems, by heating fresh outside air for discharging moist produced by the poultry and their manure, which device comprises a heat exchanger which is arranged over substantially the entire ridge length of the stable, the heat exchanger comprising an air casing in which at regular distances from each other a number of tubes are arranged, **characterized in that** the air casing is provided with adjustable air inlet openings for allowing warm stable air in, which air inlet openings are arranged over the entire length of the casing.

8. Device according to claim 7, **characterized in that** the air inlet openings are arranged at regular distances from each other in the side walls on both sides of the casings.

9. Device according to any one of the claims 7 or 8, **characterized in that** the roof is placed at a small angle to the horizontal, the angle of inclination of the roof preferably being situated between 10° and 40°.

10. Device according to any one of the claims 7, 8 or 9, **characterized in that** the heat exchanger tubes are connected to ducts to distribute the outside air led through the heat exchanger tubes to the desired places in the stable.

11. Device according to any one of the preceding claims, **characterized in that** the heat exchanger tubes are distributed at desired mutual distances over the cross-section of the casing with the help of distribution means, the distribution means preferably consisting of a number of vertical attachment rods or strips, to which several heat exchanger tubes are alternatingly attached on both sides, and which strips near the upper side are suspended from support rods that are horizontally arranged at regular distances from each other near the upper side of the casing, the vertical strips preferably being able to be moved over the support rods and each heat exchanger tube being attached to a vertical strip with the help of a flexible band and each strip being provided with vertical slots at regular distances, in which the ends of the flexible bands can be attached, the flexible bands preferably being made from synthetic, and each flexible band being hook-shaped at its ends, for instance mushroom-shaped, in order to be able to be inserted through the slots in the strip and being hooked in there.
